# EUROPÄISCHE PATENTSCHRIFT

(11) **EP 2 105 540 B1**
(45) Veröffentlichungstag und Bekanntmachung des Hinweises auf die Patenterteilung: **30.07.2014**
(21) Anmeldenummer: 08405116.8
(22) Anmeldetag: 23.04.2008
(51) Int. Cl.: E03D 3/00, E03C 1/02, E03B 7/07, F16K 31/385

(54) **Servogesteuertes Wasserventil**
Servo-controlled water valve
Robinet d'eau à servocommande

(30) Priorität: 26.03.2008 EP 08405088
(43) Veröffentlichungstag der Anmeldung: 30.09.2009
(73) Patentinhaber: Geberit International AG, 8645 Jona (CH)
(72) Erfinder: Kuster, Rolf, 8640 Rapperswil (CH)
(74) Vertreter: Frischknecht, Harry Ralph

(56) Entgegenhaltungen:
- EP-A2- 0 738 532
- GB-A- 2 365 099
- US-A1- 2003 106 587

## Beschreibung

Die Erfindung betrifft ein servogesteuertes Wasserventil gemäß dem Oberbegriff des Anspruchs 1. Mit der Filtervorrichtung soll verhindert werden, dass feste Verunreinigungen im Wasser die Funktionsfähigkeit des Ventils beeinträchtigen können. Insbesondere soll verhindert werden, dass feste Bestandteile in den vergleichsweise schmalen Steuerwasserkanal sowie die nachfolgenden Bereich des Ventils gelangen können.

Durch die EP-A-0 811 729 A ist ein servogesteuertes Wasserventil bekannt geworden, bei dem nach dem Ventilsitz eines Absperr- und Regulierventils in diesem ein Filter angeordnet ist. Der Filter ist ein Sieb und wird bei geöffnetem Absperr- und Regulierventil vom Wasser durchströmt. Grobe feste Bestandteile können somit nicht zum Steuerwasserkanal und Ventilsitz gelangen.

Die WO 96/11350 offenbart ein servogesteuertes Wasserventil, das in einem Anschlussstutzen einen Filter aufweist. Dieser ist so angeordnet, dass das in den Steuerwasserkanal fliessende Wasser diesen radial durchfliesst.

Aus der US 2003/0106587 ist ein gattungsgemäßes servogesteuertes Wasserventil bekannt geworden, wobei in einem Füllrohr ein mehrstufiger Filter angeordnet ist.

Der Erfindung liegt die Aufgabe zugrunde, ein servogesteuertes Wasserventil der genannten Gattung zu schaffen, das ohne die Leistung einzuschränken funktionssicherer ist.

Die Aufgabe wird durch dass Wasserventil nach Anspruch 1 gelöst, wobei ist bei einem gattungsgemässen Wasserventil dadurch gelöst, dass die Filtervorrichtung einen Grobfilter und einen Feinfilter aufweist. Bei dem erfindungsgemässen Wasserventil werden sehr grobe feste Bestandteile bereits vom Grobventil zurückgehalten. Mit dem Feinfilter kann verhindert werden, dass auch vergleichsweise kleine feste Bestandteile in den Steuerwasserkanal gelangen können.

Das in den Steuerwasserkanal fliessende Wasser fliesst zuerst durch den Grobfilter und dann durch den Feinfilter. Der Feinfilter ist so angeordnet, dass dieser lediglich von dem Wasser durchströmt wird, das in den Steuerwasserkanal fliesst. Die Wasserdurchleitung bei offenem Ventil erfolgt dann lediglich durch das Grobfilter. Der Strömungswiderstand kann dadurch klein gehalten werden und gleichzeitig kann verhindert werden, dass vergleichsweise kleine Teile in den Steuerwasserkanal gelangen.

Nach einer Weiterbildung der Erfindung ist vorgesehen, dass der Grobfilter herausnehmbar in einem Anschlussstutzen angeordnet ist. Dies ermöglicht eine einfache Reinigung der Filtervorrichtung.

Ist gemäss einer Weiterbildung der Erfindung der Grobfilter ein korbförmiger Einsatz mit achsialem und radialem Austritt, so ergibt sich eine besonders hohe Funktionalität bei gleichzeitig einfacher Handhabung bei der Montage und Reinigung.

Nach einer Weiterbildung der Erfindung ist vorgesehen, dass der Feinfilter ein hülsenförmiger Einsatz mit radialem Austritt ist. Ein besonderer Vorteil dieser Weiterbildung wird darin gesehen, dass der Feinfilter durch die achsiale Strömung laufend wieder gereinigt wird. Es kann sich dadurch am Feinfilter dauerhaft kein Schmutz ablagern. Der Feinfilter ist somit weitgehend selbstreinigend.

Eine besonders einfache Montage und Reinigung ist dann möglich, wenn gemäss einer Weiterbildung der Erfindung der Grobfilter und der Feinfilter zwei separate Teile sind. Insbesondere ist hierbei vorgesehen, dass der Grobfilter und/oder der Feinfilter ein Filterelement aufweisen, an dem ein Halter angespritzt ist. Dies ermöglicht eine besonders einfache Handhabung bei der Montage und bei der Reinigung.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: ein Schnitt durch ein erfindungsgemässes servogesteuertes Wasserventil, wobei das Ventil geschlossen ist,
- Figur 2: ein Schnitt gemäss Figur 1, jedoch bei geöffnetem Ventil,
- Figur 3: eine Ansicht der Filtervorrichtung in Richtung des Pfeils III der Figur 4,
- Figur 4: ein Schnitt durch die Filtervorrichtung entlang der Linie IV-IV der Figur 3,
- Figur 5: eine Ansicht der Filtervorrichtung entsprechend Pfeil V der Figur 5 und
- Figur 6: ein Schnitt durch die Filtervorrichtung entlang der Linie VI-VI der Figur 5.

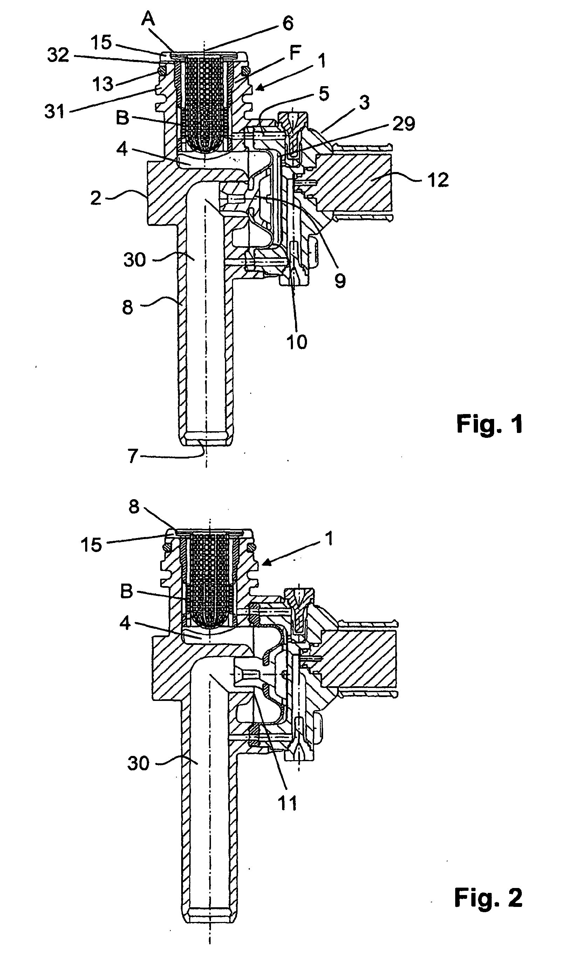

Das in den Figuren 1 und 2 gezeigte Ventil 1 besitzt einen ersten Gehäuseteil 2 und einen zweiten Gehäuseteil 3, zwischen denen eine gummielastische Membran 10 festgelegt ist. Die Membran 10 ist mit einem Verschlusskörper 9 verbunden, der mit einem Ventilsitz 11 (Fig. 2) zusammenarbeitet. In der in Figur 1 gezeigten Stellung liegt die Membran 10 am Ventilsitz 11 an, so dass die Verbindung zwischen einem Wasserkanal 4 und einem Kanal 30 unterbrochen ist. Ist das Ventil 1 gemäss Figur 2 offen, so ist der Wasserkanal 4 mit dem Kanal 30 verbunden. Ist somit ein Anschlussstutzen 31 mit einer hier nicht gezeigten Wasserleitung verbunden, so kann Wasser vom Wasserkanal 4 zum Kanal 30 strömen und ein den Kanal 30 bildendes Rohr 8 an einer Auslassöffnung 7 verlassen. Gesteuert wird das Ventil 1 mit einem pneumatischen oder elektromagnetischen Pilotventil 12, das in an sich bekannter Weise ausgebildet sein kann.

An der Rückseite der Membran 10 befindet sich eine Kammer 29, die über einen Steuerwasserkanal 5 mit einer Einlassöffnung 6 des Anschlussstutzens 31 verbunden ist. Ist der Anschlussstutzen 31 an eine Druckleitung angeschlossen und ist die Kammer 29 geschlossen, so wird entsprechend die Membran 10 vom Wasserdruck belastet und das Ventil 1 geschlossen gehalten. Wird der Druck in der Kammer 29 nach einer Betätigung des Pilotventils 12 gesenkt, so kann der Wasserdruck im Wasserkanal 4 den Verschlusskörper 9 vom Ventilsitz 11 abheben, so dass das Ventil 1 geöffnet wird. Durch Erhöhen des Drucks in der Kammer 29 kann das Ventil 1 wieder gegen den Druck im Wasserkanal 4 geschlossen werden.

Der Anschlussstutzen 31 besitzt einen im Wesentlichen zylindrischen Durchgang 32, in den von oben eine Filtervorrichtung F eingesetzt ist. Diese Filtervorrichtung F besteht aus einem Grobfilter A und einem Feinfilter B. Der Grobfilter A und der Feinfilter B bilden separate Einheiten. Der Grobfilter A kann aus dem Anschlussstutzen 31 herausgehoben werden. Der Feinfilter B kann hierbei im Anschlussstutzen 31 verbleiben. Der Grobfilter A bildet die oben erwähnte Einlassöffnung 6, durch welche Wasser in den Wasserkanal 4 und in den Steuerwasserkanal 5 fliessen kann. Für den wasserdichten Anschluss des Anschlussstutzens 31 besitzt dieser aussenseitig eine Dichtung 13. Der Anschlussstutzen 31 kann beispielsweise mit einer Steckverbindung mit einem hier nicht gezeigten Gehäuseteil verbunden sein.

Der Grobfilter A besitzt ein Filterelement 16, das korbförmig ausgebildet ist und an einem oberen Ende einen nach aussen ragenden Flansch 17 besitzt. An diesem Flansch 17 ist ein ringförmiger Halter 15 aus Kunststoff angespritzt. Das Filterelement 16 bildet ein Sieb mit einer Mehrzahl von vergleichsweise grossen Filteröffnungen 18. Diese Filteröffnungen 18 sind mit Ausnahme eines umlaufenden vergleichsweise schmalen Bereichs 33 sowohl in einer zylindrischen Seitenwandung 19 als auch in einem halbkugelförmigen Boden 21 vorhanden. Feste und vergleichsweise grobe Festteile werden in diesem Grobfilter A zurückgehalten. Durch die Einlassöffnung 6 einströmendes Wasser gelangt einerseits achsial durch das Grobfilter A hindurch und andererseits radial durch die Seitenwandung 19 in einen etwa zylindrischen Zwischenraum 20. Dieser Zwischenraum 20 ist achsial durchgängig. Wasser kann somit radial durch die Öffnungen 18 austreten und dann achsial den Zwischenraum 20 verlassen. Am Halter 15 kann der Grobfilter A aus dem Anschlussstutzen 31 herausgehoben und gereinigt werden. Wie ersichtlich, erstreckt der Grobfilter A nach unten im Wesentlichen bis in den Wasserkanal 4.

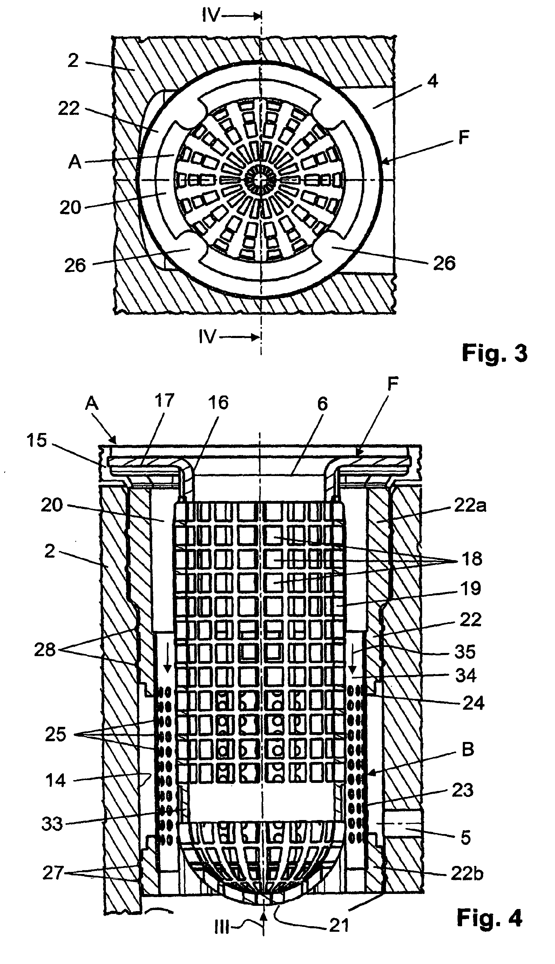

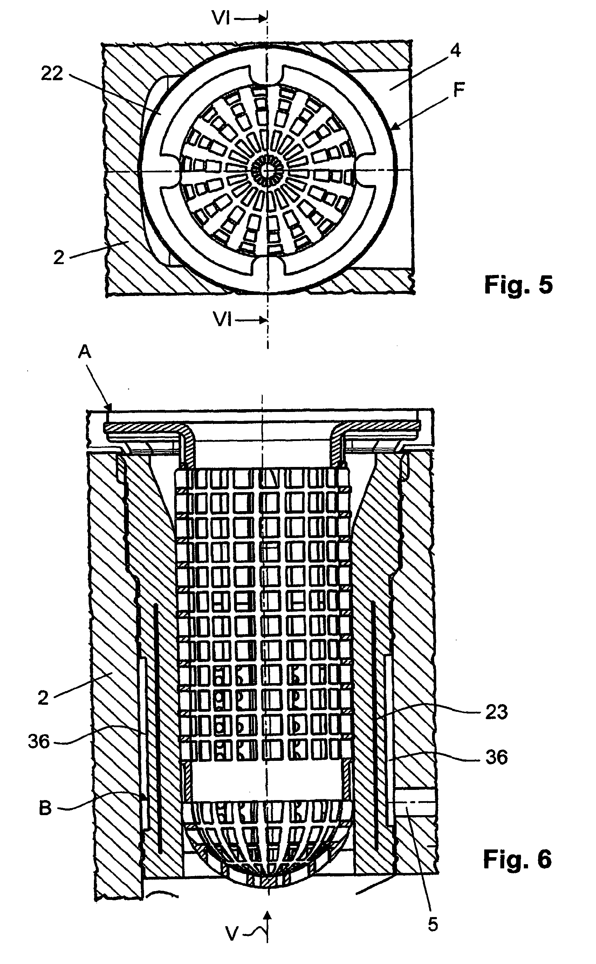

Der Feinfilter B besitzt ein hülsenförmiges Filterelement 23 mit einer Mehrzahl von Filteröffnungen 25, die wesentlich kleiner sind als die Filteröffnungen 18. An diesem Filterelement 23 ist ein Halter 22 angespritzt, der aus einem oberen Halterteil 22a und einem unteren Halterteil 22b besteht, welche über sich achsial erstreckende Rippen 26 miteinander verbunden sind, wie die Figur 6 zeigt. Die beiden Halterteile 22a und 22b sind ebenfalls hülsenförmig ausgebildet und besitzen aussenseitig umlaufende Dichtungsrippen 27 und 28, die an einer Innenseite 14 des Anschlussstutzens 31 dicht anliegen. Zwischen den beiden Halterteilen 22a und 22b befindet sich ein ringförmiger Zwischenraum 24. Dieser ist mit dem Steuerwasserkanal 5 verbunden. Ein weiterer ringförmiger Zwischenraum 34 ist zwischen dem Filterelement 23 und der zylindrischen Seitenwandung 19 des Filterelements 16 angeordnet. Dieser wird bei geöffnetem Ventil achsial durchströmt, wie dies in Figur 4 mit den Pfeilen 35 angedeutet ist. Das achsial durchströmende Wasser strömt an der Innenseite des Filterelements 23 an den Filteröffnungen 25 entlang. Ein Teil dieses Wassers gelangt zudem durch diese Filteröffnungen 25 radial nach aussen in den Zwischenraum 24. Zwischen der Einlassöffnung 6 und dem Steuerwasserkanal 5 befinden sich somit der Feinfilter B als auch der Grobfilter A. In den Steuerwasserkanal 5 einströmendes Wasser wurde somit sowohl vom Grobfilter A als auch vom Feinfilter B filtriert. In den Wasserkanal 4 können hingegen auch Teile gelangen, die kleiner als die Filteröffnungen 18 aber grösser als die Filteröffnungen 25 sind. Solche Teilchen können bei geöffnetem Ventil ohne weiteres am Ventilsitz 11 entlang in den Kanal 30 gelangen, ohne dass die Funktionsfähigkeit des Ventils 1 beeinträchtigt wäre.

Aufgrund der achsialen Strömung gemäss den Pfeilen 35 werden eventuelle Ablagerungen an der Innenseite des Filterelements 23 laufend weggeschwemmt. Diese Strömung bewirkt somit eine Selbstreinigung mit dem Resultat, dass die Filteröffnungen 25 durchlässig bleiben. Der keine Öffnungen aufweisende umlaufende Bereich 33 verstärkt die selbstreinigende Wirkung. In der Regel ist es deshalb hinreichend, wenn bei einer Reinigung lediglich der Grobfilter A ausgebaut und gereinigt wird. Nach der Reinigung des Grobfilters A kann dieser am Halter 15 von oben in den Feinfilter B eingesetzt werden. Nach innen ragende Rippen 26 des Feinfilters B führen hierbei den Grobfilter A und zentrieren diesen im Anschlussstutzen 31. Diese Rippen 26 verbinden die beiden Halterteile 22a und 22b. Die in Figur 6 gezeigten Ausnehmungen 36 an der Aussenseite der Rippen 26 ermöglichen eine umlaufende Verbindung des Zwischenraums 24. Da der Feinfilter B wie ersichtlich koaxial und im Abstand zum Grobfilter A angeordnet ist, beeinflusst dieser den Wasserstrom und damit die Leistung bei geöffnetem Ventil 1 im Wesentlichen nicht.

Das Ventil 1 ist insbesondere für Sanitärgeräte- und Apparaturen vorgesehen. Insbesondere ist das Ventil 1 beispielsweise ein Spülventil für ein Urinal oder eine WC-Anlage.

**Bezugszeichenliste**

| | | | |
|---|---|---|---|
| 1 | Ventil | 22 | Halter |
| 2 | Gehäuseteil | 22a | Halterteil |
| 3 | Gehäuseteil | 22b | Halterteil |
| 4 | Wasserkanal | 23 | Filterelement |
| 5 | Steuerwasserkanal | 24 | Zwischenraum |
| 6 | Einlassöffnung | 25 | Filteröffnungen |
| 7 | Auslassöffnung | 26 | Rippen |
| 8 | Rohr | 27 | Dichtungsrippen |
| 9 | Verschlusskörper | 28 | Dichtungsrippen |
| 10 | Membran | 29 | Kammer |
| 11 | Ventilsitz | 30 | Kanal |
| 12 | Pilotventil | 31 | Anschlussstutzen |
| 13 | Dichtung | 32 | Durchgang |
| 14 | Innenseite | 33 | Bereich |
| 15 | Halter | 34 | Zwischenraum |
| 16 | Filterelement | 35 | Pfeil |
| 17 | Flansch | 36 | Ausnehmungen |
| 18 | Filteröffnungen | A | Grobfilter |
| 19 | Seitenwandung | B | Feinfilter |
| 20 | Zwischenraum | F | Filtervorrichtung |
| 21 | Boden | | |

## Patentansprüche

1. Servogesteuertes Wasserventil, mit einem Wasserkanal (4) für die Wasserdurchleitung, von dem ein Steuerwasserkanal (5) abzweigt, mit einer Filtervorrichtung (F), in der das Wasser in Strömungsrichtung gesehen vor dem Steuerwasserkanal (5) gefiltert wird, wobei die Filtervorrichtung (F) einen Grobfilter (A) und einen Feinfilter (B) aufweist,
wobei zwischen einer Einlassöffnung (6) und dem Steuerwasserkanal (5) sowohl der Grobfilter (A) als auch der Feinfilter (B) angeordnet sind, so dass in den Steuerwasserkanal (5) gelangendes Wasser von beiden Filtern (A, B) gefiltert ist,
**dadurch gekennzeichnet, dass** der Feinfilter (B) so angeordnet, dass dieser lediglich von dem Wasser durchströmt wird, das in den Steuerwasserkanal (5) fliesst, und
dass die Wasserdurchleitung bei offenem Ventil dann lediglich durch den Grobfilter (A) erfolgt.

2. Wasserventil nach Anspruch 1, **dadurch gekennzeichnet, dass** zumindest der Grobfilter (A) herausnehmbar in einen Anschlussstutzen (31) eingesetzt ist.

3. Wasserventil nach einem der Ansprüche 1 bis 2, **dadurch gekennzeichnet, dass** der Grobfilter (A) ein korbförmiger Einsatz mit achsialem und radialem Austritt ist.

4. Wasserventil nach einem der Ansprüche 1 bis 3, **dadurch gekennzeichnet, dass** der Feinfilter (B) ein hülsenförmiges Filterelement (23) mit radialem Austritt aufweist.

5. Wasserventil nach einem der Ansprüche 1 bis 4, **dadurch gekennzeichnet, dass** der Feinfilter (B) koaxial und in Strömungsrichtung gesehen ausserhalb des Grobfilters (A) angeordnet ist.

6. Wasserventil nach einem der Ansprüche 1 bis 5, **dadurch gekennzeichnet, dass** der Grobfilter (A) und der Feinfilter (B) zwei separate Teile sind.

7. Wasserventil nach einem der Ansprüche 1 bis 6, **dadurch gekennzeichnet, dass** der Grobfilter (A) an einem oberen Ende einen Flansch (17) aufweist, an dem ein ringförmiger Halter (15) befestigt ist.

8. Wasserventil nach einem der Ansprüche 1 bis 7, **dadurch gekennzeichnet, dass** der Feinfilter (B) einen hülsenförmigen Halter (22) aufweist, der von oben dicht in einem Gehäuseteil (2) eingesetzt ist und der einen Zwischenraum (24) für den radialen Durchtritt von Wasser bildet.

9. Wasserventil nach Anspruch 8, **dadurch gekennzeichnet, dass** der Halter (22) des Feinfilters (B) nach innen gerichtete und sich achsial erstreckende Rippen (26) aufweist, an denen der Grobfilter (A) gelagert ist.

10. Wasserventil nach einem der Ansprüche 1 bis 9, **dadurch gekennzeichnet, dass** es ein Spülventil ist.

## Claims

1. Servo-controlled water valve having a water channel (4) for conducting water from which a control water channel (5) branches, having a filter device (F) in which the water is filtered upstream of the control water channel (5) viewed in the flow direction, wherein the filter device (F) has a coarse filter (A) and a fine filter (B), wherein both the coarse filter (A) and also the fine filter (B) are arranged between an inlet opening (6) and the control water channel (5), so that water reaching the control water channel (5) is filtered by both filters (A,B), **characterized in that**
the fine filter (B) is arranged such that only water which flows into the control water channel (5) flows through it and that
when the valve is open water is only conveyed through the coarse filter (A).

2. Water valve according to Claim 1, **characterized in that** at least the coarse filter (A) is inserted in a connection nozzle (31) in a removable manner.

3. Water valve according to one of the Claims 1 to 2, **characterized in that** the coarse filter (A) is a basket-shaped insert with an axial and radial outlet.

4. Water valve according to one of the Claims 1 to 3, **characterized in that** the fine filter (B) has a sleeve-shaped filter element (23) with a radial outlet.

5. Water valve according to one of the Claims 1 to 4, **characterized in that** the fine filter (B) is arranged coaxially and outside the coarse filter (A) viewed in the flow direction.

6. Water valve according to one of the Claims 1 to 5, **characterized in that** the coarse filter (A) and the fine filter (B) are two separate parts.

7. Water valve according to one of the Claims 1 to 6, **characterized in that** the coarse filter (A) has a flange (17) on an upper end, to which a ring-shaped holder (15) is attached.

8. Water valve according to one of the Claims 1 to 7, **characterized in that** the fine filter (B) has a sleeve-shaped holder (22) which is tightly inserted from above in a housing part (2) and which creates an intermediate space (24) for the radial passage of water.

9. Water valve according to Claim 8, **characterized in that** the holder (22) of the fine filter (B) displays inwardly directed and axially extending ribs (26), on which the coarse filter (A) is mounted.

10. Water valve according to one of the Claims 1 to 9, **characterized in that** it is a flush valve.

## Revendications

1. Robinet d'eau à servocommande, comprenant un conduit d'eau (4) pour le passage d'eau, depuis lequel part un conduit d'eau de commande (5), avec un dispositif de filtre (F) dans lequel l'eau est filtrée avant le conduit d'eau de commande (5), vu dans la direction de l'écoulement, le dispositif de filtre (F) présentant un filtre grossier (A) et un filtre fin (B),
entre l'ouverture d'entrée (6) et le canal d'eau de commande (5) étant disposés le filtre grossier (A) ainsi que le filtre fin (B), de telle sorte que l'eau parvenant dans le canal d'eau de commande (5) soit filtrée par les deux filtres (A, B),
**caractérisé en ce que** le filtre fin (B) est disposé de telle sorte que celui-ci soit parcouru uniquement par l'eau qui s'écoule dans le conduit d'eau de commande (5), et
**en ce que** le passage d'eau se produit lorsque le robinet est ouvert uniquement à travers le filtre grossier (A).

2. Robinet d'eau selon la revendication 1, **caractérisé en ce qu'**au moins le filtre grossier (A) est inséré dans une tubulure de raccordement (31) de manière à pouvoir en être retiré.

3. Robinet d'eau selon l'une quelconque des revendications 1 à 2, **caractérisé en ce que** le filtre grossier (A) est un insert en forme de panier avec une sortie axiale et radiale.

4. Robinet d'eau selon l'une quelconque des revendications 1 à 3, **caractérisé en ce que** le filtre fin (B) présente un élément de filtre en forme de douille (23) avec une sortie radiale.

5. Robinet d'eau selon l'une quelconque des revendications 1 à 4, **caractérisé en ce que** le filtre fin (B) est disposé coaxialement et, vu dans la direction de l'écoulement, à l'extérieur du filtre grossier (A).

6. Robinet d'eau selon l'une quelconque des revendications 1 à 5, **caractérisé en ce que** le filtre grossier (A) et le filtre fin (B) sont deux pièces séparées.

7. Robinet d'eau selon l'une quelconque des revendications 1 à 6, **caractérisé en ce que** le filtre grossier (A) présente à une extrémité supérieure une bride (17) sur laquelle est fixé un support annulaire (15).

8. Robinet d'eau selon l'une quelconque des revendications 1 à 7, **caractérisé en ce que** le filtre fin (B) présente un support en forme de douille (22) qui est inséré par le dessus de manière étanche dans une partie de boîtier (2) et qui forme un espace intermédiaire (24) pour le passage radial d'eau.

9. Robinet d'eau selon la revendication 8, **caractérisé en ce que** le support (22) du filtre fin (B) présente des nervures orientées vers l'intérieur et s'étendant axialement (26) sur lesquelles est monté le filtre grossier (A).

10. Robinet d'eau selon l'une quelconque des revendications 1 à 9, **caractérisé en ce qu'**il s'agit d'un robinet de purge.
